# EUROPÄISCHE PATENTSCHRIFT

(11) **EP 2 647 433 B1**
(45) Veröffentlichungstag und Bekanntmachung des Hinweises auf die Patenterteilung: **08.11.2017**
(21) Anmeldenummer: 13155987.4
(22) Anmeldetag: 20.02.2013
(51) Int. Cl.: B01L 3/00, G05D 7/00

(54) **Reagenzgefäß-Einsetzteil und Reagenzgefäß**
Reagent container insert part and reagent container
Pièce d'insertion de flacon de réactif et flacon de réactif

(30) Priorität: 04.04.2012 DE 102012205523
(43) Veröffentlichungstag der Anmeldung: 09.10.2013
(73) Patentinhaber: Robert Bosch GmbH, 70442 Stuttgart (DE)
(72) Erfinder: Daub, Martina, 71287 Weissach (DE); Roth, Guenter, 79100 Freiburg (DE); Paust, Nils, 79100 Freiburg (DE); Steigert, Juergen, 70176 Stuttgart (DE)

(56) Entgegenhaltungen:
- WO-A1-98/57082
- DE-A1- 3 508 435
- DE-A1-102010 003 223
- US-A1- 2006 021 673
- US-A1- 2010 288 949

## Beschreibung

Die Erfindung betrifft ein Reagenzgefäß-Einsetzteil. Ebenso betrifft die Erfindung ein Reagenzgefäß. Des Weiteren betrifft die Erfindung ein Verfahren zum Zentrifugieren eines Materials und ein Verfahren zum Druckbehandeln eines Materials.

### Stand der Technik

In der DE 10 2010 003 223 A1 ist eine Vorrichtung zum Einsetzen in einen Rotor einer Zentrifuge beschrieben. Die im Format eines Standard-Zentrifugenröhrchens ausgebildete Vorrichtung kann verschiedene Revolver umfassen, welche axial übereinander angeordnet sind. Die Revolver können Kanäle, Kavitäten, Reaktionskammern und weitere Strukturen für die Durchführung von fluidischen Einheitsoperationen aufweisen. Über eine integrierte Kugelschreibermechanik können die Revolver bezüglich ihrer Positionen zueinander rotiert werden, wodurch sich die Strukturen der Revolver zueinander schalten lassen. Eine Aktualisierung der Kugelschreibermechanik ist nach dem Einsetzen der Vorrichtung in eine Zentrifuge mittels einer durch den Betrieb der Zentrifuge bewirkten Zentrifugalkraft auslösbar. Gleichzeitig können Flüssigkeiten entlang dem Kraftvektor der bewirkten Zentrifugalkraft transferiert werden.

Die US 2006/0021673 A1 offenbart eine Vorrichtung zur Selbstabdichtung eines Reaktionsgefäßes, wobei auf das Reaktionsgefäß wiederholt durch einen Fluidübertragungsmechanismus zugegriffen werden kann, und das Reaktionsgefäß selbst abgedichtend ausgebildet ist.
Die US 2010/0288949 A1 offenbart eine Dünnschicht-Bio-Ventilvorrichtung und eine Vorrichtung zum Steuern der Dünnschicht-Bio-Ventileinrichtung, welche in einer Ventilstruktur einer Dünnschichtvorrichtung, wie einem auf-dem-Chip-Labor, einen Protein-Chip oder einem DNA-Chip, zur Diagnose und / oder zum Nachweis einer kleinen Menge von Material in einer Flüssigkeit angewandt werden.

Die WO 98/57082 offenbart einen druckbetätigbaren, magnetisch geschlossenen Ventilmechanismus für Fluide, wobei ein Magnetfluß durch einen Magnetkörper und durch die Enden ferromagnetischer Platten zum sicheren Halten des ferromagnetischen Körpers der Komponente fließt, wenn sie damit in Kontakt gebracht wird.

Die DE 35 08 435 A1 offenbart ein dynamisches Entlüftungsventil für flüssige oder gasförmige Stoffe, bei dem der Schliesskolben in Abhängigkeit von der auf die gasförmigen Stoffe wirkenden Zentrifugalkraft gegen eine Zentripedalkraft radial verstellbar angeordnet ist, wobei zur Erzeugung der Zentripedalkraft weniqstens ein Dauermagnet vorgesehen ist.

### Offenbarung der Erfindung

Die Erfindung schafft ein Reagenzgefäß-Einsetzteil mit den Merkmalen des Anspruchs 1, ein Reagenzgefäß mit den Merkmalen des Anspruchs 6, ein Verfahren zum Zentrifugieren eines Materials mit den Merkmalen des Anspruchs 7 und ein Verfahren zum Druckbehandeln eines Materials mit den Merkmalen des Anspruchs 9.

### Vorteile der Erfindung

Die vorliegende Erfindung realisiert magnetische Systeme als Gegenpart zu einer mittels einer Zentrifuge bewirkten Zentrifugalkraft und/oder einer mittels einer Druckvariiervorrichtung bewirkten Druckkraft, welche in chemische Prozesse und/oder biochemische Prozesse integrierbar sind. Beispielsweise können die magnetischen Systeme dazu genutzt werden, einen Flüssigkeitsfluss beim Ablauf der chemischen und/oder biochemischen Prozesse, insbesondere entgegen der Zentrifugalkraft und/oder der Druckkraft, präziser zu steuern. Während herkömmlicher Weise der Flüssigkeitsfluss ausschließlich durch die mittels des Zentrifugierens bewirkte Zentrifugalkraft oder durch die mittels der Druckvariiervorrichtung bewirkten Druckkraft steuerbar ist, kann mittels der vorliegenden Erfindung der Flüssigkeitsfluss noch genauer gesteuert werden.

In einer Ausführungsform der Erfindung ist das mindestens eine Stellelement mittels einer bei einem Betrieb der Zentrifuge, in deren Rotoreinrichtung das Reagenzgefäß mit dem darin eingesetzten Reagenzgefäß-Einsetzteil angeordnet ist, bewirkbaren Zentrifugalkraft größer als der magnetischen Anziehungskraft und/oder mittels einer bei einem Betrieb der Druckvariiervorrichtung, in welcher das Reagenzgefäß mit dem darin eingesetzten Reagenzgefäß-Einsetzteil angeordnet ist, bewirkbaren Druckkraft größer als der magnetischen Anziehungskraft in Bezug zu dem mindestens einen Magneten verstellbar. Somit kann eine aktuelle Stellung/Position des mindestens einen Stellelements mittels der Zentrifugalkraft und/oder der Druckkraft frei eingestellt werden. Mittels des in Bezug zu dem mindestens einen Magneten verstellten mindestens einen Stellelements eine Schneidekante, eine Spitze und/oder ein Dorn sind in einen Kontakt mit einer mittels der Schneidekante, der Spitze und/oder des Dorns durchdringbaren Schicht bringbar. Das magnetische System erfüllt in diesem Fall die Funktion eines Aufschneidemechanismus und/oder eines Durchtrennmechanismus.

Als Ergänzung dazu kann das mindestens eine Stellelement aus mindestens einer Ausgangsstellung in mindestens eine Betriebsstellung in Bezug zu dem mindestens einen Magneten verstellbar sein, wobei zwischen dem mindestens einen in seiner mindestens einen Ausgangsstellung vorliegenden Stellelement und einer Umgebung des in seiner mindestens einen Ausgangsstellung vorliegenden Stellelements eine erste Durchströmfläche vorliegt, welche ungleich einer zweiten Durchströmfläche zwischen dem mindestens einen in seiner mindestens einen Betriebsstellung vorliegenden Stellelement und einer Umgebung des in seiner mindestens einen Betriebsstellung vorliegenden Stellelements ist. Das magnetische System ist damit als Drossel nutzbar.

Insbesondere kann das mindestens eine Stellelement in seiner mindestens einen Ausgangsstellung und/oder in seiner mindestens einen Betriebsstellung einen in dem Innenvolumen ausgebildeten Kanalverengungsbereich flüssigkeitsdicht verschließen. Somit kann das magnetische System auch als Ventil eingesetzt werden.

In einer vorteilhaften Weiterbildung umfasst das Reagenzgefäß-Einsetzteil mindestens einen Revolver und/oder eine Kugelschreibermechanik. Die Technologie des vorteilhaften Reagenzgefäß-Einsetzteils ist somit mit weiteren Technologien zum Steuern von chemischen und biochemischen Prozessen kombinierbar.

Das zumindest aus dem mindestens einen Magneten und dem mindestens einen Stellelement gebildete magnetische System kann als Aufschneidemechanismus, als Durchtrennmechanismus, als Drossel, als Ventil, als Schließeinrichtung, als Klappmechanismus, als Pumpe und/oder als Mischeinrichtung ausgelegt sein. Es wird darauf hingewiesen, dass das magnetische System eine kostengünstige und wenig Bauraum benötigende Realisierung zum Ausführen der hier aufgezählten Funktionen darstellt.

Die oben genannten Vorteile sind auch mittels des entsprechenden Reagenzgefäßes, des Verfahrens zum Zentrifugieren eines Materials und des Verfahrens zum Druckbehandeln eines Materials bewirkbar.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform des Reagenzgefäß-Einsetzteils der Erfindung;
- Fig. 2: eine schematische Darstellung einer zweiten Ausführungsform des Reagenzgefäß-Einsetzteils der Erfindung;
- Fig. 3a und 3b: schematische Darstellungen eines Reagenzgefäß-Einsetzteils;
- Fig. 4a und 4b: schematische Darstellungen eines Reagenzgefäß-Einsetzteils;
- Fig. 5a bis 5d: schematische Darstellungen eines Reagenzgefäß-Einsetzteils;
- Fig. 6a bis 6d: schematische Darstellungen eines Reagenzgefäß-Einsetzteils;
- Fig. 7: eine schematische Darstellung eines Reagenzgefäß-Einsetzteils;
- Fig. 8: eine schematische Darstellung eines Reagenzgefäß-Einsetzteils;
- Fig. 9: eine schematische Darstellung eines Reagenzgefäß-Einsetzteils;
- Fig. 10: eine schematische Darstellung eines Reagenzgefäß-Einsetzteils;
- Fig. 11: eine schematische Darstellung eines Reagenzgefäß-Einsetzteils;
- Fig. 12: eine schematische Darstellung eines Reagenzgefäß-Einsetzteils;
- Fig. 13: eine schematische Darstellung einer Zentrifuge zum Erläutern einer Ausführungsform des Verfahrens zum Zentrifugieren eines Materials; und
- Fig. 14: ein Flussdiagramm zum Erläutern einer Ausführungsform des Verfahrens zum Druckbehandeln eines Materials.

### Ausführungsformen der Erfindung

Die nachfolgend erläuterten Figuren zeigen jeweils ein Reagenzgefäß-Einsetzteil, bzw. eine Untereinheit eines (nur teilweise wiedergegebenen) Reagenzgefäß-Einsetzteils. Jedes der Reagenzgefäß-Einsetzteile weist ein (nicht genauer ausgeführtes) Einsetzteilgehäuse 10 auf, welches so ausgebildet ist, dass das Reagenzgefäß-Einsetzteil in ein Reagenzgefäß für eine Zentrifuge und/oder eine Druckvariiervorrichtung einsetzbar ist. Die Einsetzbarkeit eines Reagenzgefäß-Einsetzteils in das betreffende Reagenzgefäß für eine Zentrifuge und/oder eine Druckvariiervorrichtung kann so interpretiert werden, dass eine Außenwand des Einsetzteilgehäuses 10 zu einer Innenwand des Reagenzgefäßes korrespondiert. Vorzugsweise kontaktiert die Außenwand des Einsetzteilgehäuses 10 die Innenwand des Reagenzgefäßes derart, dass auch während eines Betriebs der Zentrifuge und/oder der Druckvariiervorrichtung ein verlässlicher Halt des Reagenzgefäß-Einsetzteils in dem betreffenden Reagenzgefäß gewährleistet ist.

Unter dem Reagenzgefäß kann beispielsweise ein (Standard)-Reagenzglas/Reagenzröhrchen verstanden werden. Weitere Ausführungsbeispiele sind Zentrifungenröhrchen, 1,5 ml Eppendorf-Röhrchen, 2 mL Eppendorf-Röhrchen, 5 mL Eppendorf-Röhrchen und Mikrotiterplatten, wie z.B. 20 µL Mikrotiterplatten (pro Kavität). Ebenso kann das Reagenzgefäß ein Testträger oder eine Einwegkartusche sein, welche als Lab-on-a-Chip-system auf einem plastikartengroßen Kunststoffsubstrat ausgebildet ist. Es wird jedoch darauf hingewiesen, dass die Ausbildbarkeit des Reagenzgefäßes nicht auf die hier aufgezählten Beispiele limitiert ist. Außerdem sind die Maße des Reagenzgefäßes lediglich aufgrund einer erwünschten Einsetzbarkeit des Reagenzgefäßes in der Zentrifuge und/oder in der Druckvariiervorrichtung vorgegeben. Die Ausführbarkeit der im Weiteren beschriebenen erfindungsgemäßen Technologien schreibt jedoch keine äußere Form des Reagenzgefäßes vor. Außerdem kann das Reagenzgefäß zur Aufnahme von Proben in einer Menge ausgelegt sein, welche wahlweise aus einem Bereich von wenigen µL bis zu 1L gewählt werden kann.

Die nachfolgenden Erläuterungen gelten auch für ein Reagenzgefäß für eine Zentrifuge und/oder eine Druckvariiervorrichtung, welches entsprechend den erläuterten Reagenzgefäß-Einsetzteilen ausgebildet ist. Das vorteilhafte Reagenzgefäß weist eine Außenwand auf, welche so ausgebildet ist, dass das Reagenzgefäß in einer Zentrifuge und/oder in einer Druckvariiervorrichtung einsetzbar ist. Insbesondere ist das Reagenzgefäß so ausgebildet, dass ein verlässlicher Halt des Reagenzgefäßes in der betriebenen Zentrifuge und/oder in der betriebenen Druckvariiervorrichtung gewährleistet ist. Unter einem Reagenzgefäß für eine Zentrifuge und/oder eine Druckvariiervorrichtung kann somit ein Reagenzgefäß verstanden werden, welches sich aufgrund seiner (äußeren) Form gut für einen Betrieb der Zentrifuge mit einer vergleichsweise großen Drehzahl und/oder für ein Anlegen eines stark von dem Atmosphärendruck abweichenden Über- und/oder Unterdrucks mittels der Druckvariiervorrichtung eignet. Das vorteilhafte Reagenzgefäß kann als die oben schon aufgezählten Ausführungsformen ausgebildet sein, ohne dass es darauf limitiert ist.

Es wird darauf hingewiesen, dass unter der im Weiteren erwähnten Zentrifuge und Druckvariiervorrichtung keine bestimmten Gerätetypen zu verstehen sind. Stattdessen ist die erfindungsgemäße Technologie mittels jeder Zentrifuge nutzbar, mittels welcher eine (Mindest-)Zentrifugalkraft ab 20 g ausübbar ist. Ebenso kann die erfindungsgemäße Technologie für jede Druckvariiervorrichtung genutzt werden, mittels welcher ein Unter- und/oder Überdruck anlegbar ist.

Die nachfolgend beschriebenen Ausführungsformen des Reagenzgefäß-Einsetzteils/Reagenzgefäßes weisen mindestens einen in Bezug zu dem Einsetzteilgehäuse 10/der Außenwand unverstellbar angeordneten Magneten 12 auf. Der mindestens eine Magnet 12 eines Reagenzgefäß-Einsetzteils kann in dem Reagenzgefäß-Einsetzteil und/oder an einer äußeren Wand des Einsetzteilgehäuses 10 angeordnet/befestigt sein. Bei einem Reagenzgefäß mit der vorteilhaften Ausbildung kann der mindestens eine Magnet 12 auch an und/oder in der Reagenzgefäßwand angeordnet/befestigt sein. Bevorzugter Weise ist der mindestens eine Magnet 12 so angeordnet, dass seine Position in oder an dem Reagenzgefäß-Einsetzteil/Reagenzgefäß selbst bei einer vergleichsweise großen Zentrifugalkraft/Druckkraft nicht verändert wird. Außerdem hat jede der nachfolgend beschriebenen Ausführungsformen des Reagenzgefäß-Einsetzteils/Reagenzgefäßes auch mindestens ein in einem Innenvolumen 14 des Reagenzgefäß-Einsetzteils/Reagenzgefäßes angeordnetes Stellelement 16. Das Stellelement 16 ist zumindest teilweise so aus einem magnetisch-anziehbaren Material ausgebildet, dass eine von dem mindestens einen Magneten 12 auf das mindestens eine Stellelement 16 ausgeübte magnetische Anziehungskraft zumindest größer als eine Gewichtskraft des mindestens einen Stellelements 16 ist. Beispielsweise kann das mindestens eine Stellelement 16 als magnetisch-anziehbares Material mindestens ein ferromagnetisches Material und/oder ein paramagnetisches Material umfassen. Insbesondere kann das mindestens eine Stellelement 16 zumindest teilweise aus einem Metall gebildet sein. Außerdem kann das mindestens eine Stellelement 16 auch einen Polymer und/oder einen Elastomer aufweisen, mit welchem das mindestens eine Stellelement 16 zumindest teilweise beschichtet ist. Ebenso kann das mindestens eine Stellelement 16 mehrere magnetische Partikel umfassen, welche in eine Polymerstruktur oder in einen Elastomer integriert sind. Die Geometrie des mindestens einen Stellelements 16 ist frei wählbar, wobei ein Durchmesser des mindestens einen Stellwertelements 16 z.B. in einem Bereich von 1 µm bis 3 cm liegen kann. Das mindestens eine Stellelement 16 kann beispielsweise als Kugel, als Ring, als Platte, als Gitter, als Sieb und/oder als Stab ausgebildet sein. Weitere Formen können ebenfalls bei der Ausbildung des mindestens einen Stellelements 16 Verwendung finden. Das mindestens eine Stellelement 16 kann auch aus mehreren Einzelkomponenten bestehen, wie beispielsweise einer Beadschüttung. Des Weiteren kann eine Oberfläche des mindestens einen Stellelements 16 so modifiziert sein, dass definierte Bindungsreaktionen und/oder Wechselwirkungen an der Oberfläche des mindestens einen Stellelements 16 stattfinden. Beispielsweise kann die Oberfläche des mindestens einen Stellelements 16 mit DNA-Strängen, Antigenen und/oder Proteinen, insbesondere mit Antikörpern, modifiziert sein. Das mindestens eine Stellelement 16 ist mittels einer bei einem Betrieb der Zentrifuge, in deren Rotoreinrichtung das Reagenzgefäß mit den darin eingesetzten Reagenzgefäß-Einsetzteil angeordnet ist, bewirkten Zentrifugalkraft größer als der magnetischen Anziehungskraft und/oder mittels einer bei einem Betrieb der Druckvariiervorrichtung, in welcher das Reagenzgefäß mit den darin eingesetzten Reagenzgefäß-Einsetzteil angeordnet ist, bewirkten Druckkraft größer als der magnetischen Anziehungskraft in Bezug zu dem mindestens einen Magneten 12 verstellbar. Wie nachfolgend genauer ausgeführt wird kann ein aus dem mindestens einen Magneten 12 und dem mindestens einen Stellelement 16 ausgebildetes magnetisches System damit die Funktionen eines Aufschneidemechanismus, eines Durchtrennmechanismus, einer Drossel, eines Ventils, einer Schließeinrichtung, eines Klappmechanismus, einer Pumpe und/oder einer Mischeinrichtung erfüllen. Es wird darauf hingewiesen, dass das magnetische System eine kostengünstige und wenig Bauraum benötigende Realisierung zum Ausführen der oben aufgezählten Funktionen darstellt.

Man kann die vorteilhafte Funktionsweise des aus dem mindestens einen Magneten 12 und dem mindestens einen Stellelement 16 realisierten magnetischen Systems in einer Zentrifuge somit so umschreiben, dass bei einer Rotationsbeschleunigung/ Drehgeschwindigkeit der Zentrifuge unter einem vorgegebenen Grenzwert die auf das mindestens eine Stellelement 16 ausgeübte magnetische Kraft kleiner als die bewirkte Zentrifugalkraft ist, und somit das mindestens eine Stellelement 16 in mindestens einer Ausgangsstellung/Ruheposition gehalten wird. Der vorgegebene Grenzwert entspricht in der Regel einer Rotationsbeschleunigung/Drehgeschwindigkeit, welche eine Zentrifugalkraft gleich der durch den mindestens einen Magneten 12 auf das mindestens eine Stellelement 16 ausgeübten magnetischen Kraft bewirkt. Überschreitet die Rotationsbeschleunigung/Drehgeschwindigkeit der Zentrifuge den vorgegebenen Grenzwert, so wird die bewirkte Zentrifugalkraft auf das mindestens eine Stellelement 16 größer als die darauf ausgeübte magnetische Anziehungskraft/Rückhaltekraft des Magneten 12, und das nicht mehr in seiner mindestens einen Ausgangsstellung/Ruheposition haltbare mindestens eine Stellelement 16 wird radial in Richtung der Zentrifugalkraft beschleunigt. Das mindestens eine Stellelement 16 bewegt sich somit bei einer Rotationsbeschleunigung/Drehgeschwindigkeit der Zentrifuge über dem vorgegebenen Grenzwert mit einer in Richtung der Zentrifugalkraft gerichteten Bewegungskomponente ungleich Null von dem mindestens einen Magneten 12 weg.

Der Grenzwert/Schwellwert für die Rotationsbeschleunigung/Drehgeschwindigkeit der Zentrifuge, ab welcher die bewirkte Zentrifugalkraft größer als die magnetische Anziehungskraft des Magneten 12 wird, kann bei mindestens 20 g, beispielsweise bei mindestens 100 g, vorzugsweise bei mindestens 500 g, insbesondere bei mindestens 1000 g, liegen. Es wird darauf hingewiesen, dass der Schwellwert der Rotationsbeschleunigung, ab welcher die Zentrifugalkraft größer als die magnetische Anziehungskraft des Magneten 12 wird, in einem Bereich zwischen 20 g bis 10000 g auf einfache Weise (frei) festlegbar ist. Dies ist beispielsweise möglich durch eine Wahl der Parameter des Magneten 12 und/oder der Materialzusammensetzung des mindestens einen Stellelements 16.

Entsprechend ist die vorteilhafte Funktionsweise des aus dem mindestens einen Magneten 12 und dem mindestens einen Stellelement 16 realisierten magnetischen Systems in einer Druckvariiervorrichtung so umschreibbar, dass erst ein Unter- und/oder Überdruck, welcher um mindestens eine vorgegebene Druckdifferenz von dem Atmosphärendruck abweicht, eine Druckkraft auf das mindestens eine Stellelement 16 bewirkt, welche größer als die magnetische Anziehungskraft des mindestens einen Magneten ist, und somit eine Beschleunigung des mindestens einen Stellelements 16 in Richtung der Druckkraft auslöst. Das mindestens eine Stellelement 16 bewegt sich auch in diesem Fall mit einer in Richtung der Druckkraft gerichteten Bewegungskomponente ungleich Null von dem mindestens einen Magneten 12 weg.

Das mindestens eine Stellelement 16 ist in einem Innenvolumen des Reagenzgefäß-Einsetzteils/Reagenzgefäßes angeordnet, in welchem mindestens ein Kanal, mindestens eine Kavität und/oder mindestens eine Reaktionskammer ausgebildet sein können. In dem Innenvolumen des Reagenzgefäß-Einsetzteils/Reagenzgefäßes können Prozessschritte und Strukturen integriert sein, wie beispielsweise Sedimentationsstrukturen, Kanalstrukturen oder Siphonstrukturen zum Weiterleiten und Schalten von mindestens einer in dem Reagenzgefäß-Einsetzteil/Reagenzgefäß enthaltenen Flüssigkeit. Insbesondere kann mindestens eine Untereinheit des Innenvolumens des Reagenzgefäß-Einsetzteils/Reagenzgefäßes als "Vorratsbehälter" mit mindestens einer Flüssigkeit gefüllt sein, welche mit einem nachträglich eingefüllten, zu verarbeitenden und/oder zu untersuchenden Material/Probenmaterial mindestens eine chemische Reaktion und/oder einen biochemischen/molekularbiologischen Prozess ausführt. Der mindestens eine "Vorratsbehälter" kann z.B. mit Chemikalien, Farbstoffen, Antikörpern, Antigenen, Rezeptoren, Proteinen, DNA-Strängen und/oder RNA-Strängen gefüllt sein. Das Innenvolumen des Reagenzgefäß-Einsetzteils/Reagenzgefäßes kann zumindest teilweise aus einem Polymer, z.B. aus COP, COC, PC, PA, PU, PP, PET und/oder PMMA, sein. Auch weitere Materialien sind zum Bilden des Innenvolumens des Reagenzgefäß-Einsetzteils/Reagenzgefäßes geeignet. Außerdem kann ein Reagenzgefäß-Einsetzteil/Reagenzgefäß auch mindestens einen Revolver und/oder eine Kugelschreibermechanik umfassen. Ein in dem Reagenzgefäß-Einsetzteil/Reagenzgefäß einsetzbarer Revolver kann ein Volumen kleiner als 5 Milliliter fassen. Ein einzelner Revolver kann so ausgelegt werden, dass er in einen Stapel weiterer Revolver und/oder Reaktionskammern integrierbar ist. Mittels einer Kugelschreibermechanik können die (axial übereinander gestapelten) Revolver, Reaktionskammern und/oder Kavitäten axial wie auch azimutal zueinander positioniert werden. Bezüglich einer möglichen Ausführung eines verwendbaren Revolvers und/oder der Kugelschreibermechanik wird auf die DE 2010 003 223 A1 verwiesen. Die im Weiteren beschriebenen Ausführungsformen eines Reagenzgefäß-Einsetzteils/Reagenzgefäßes können auch mit zusätzlichen Komponenten, wie beispielsweise Ventilen und/oder Pumpen, ausgestattet sein. Außerdem kann die erfindungsgemäße Technologie auf einfache Weise so mit herkömmlichen Methoden kombiniert werden, dass ein magnetisches System des Reagenzgefäß-Einsetzteils/Reagenzgefäßes auch mit einer Vielzahl von herkömmlichen Aktuations-, Detektions- und/oder Steuereinheiten zusammenwirken kann.

Mittels der im Weiteren beschriebenen Reagenzgefäß-Einsetzteile/Reagenzgefäße können chemische und biochemische Prozesse voll automatisiert ausgeführt werden. Es wird darauf hingewiesen, dass die beschriebenen Figuren als Vereinfachungen der realisierbaren Reagenzgefäß-Einsetzteile/Reagenzgefäße interpretiert werden können.

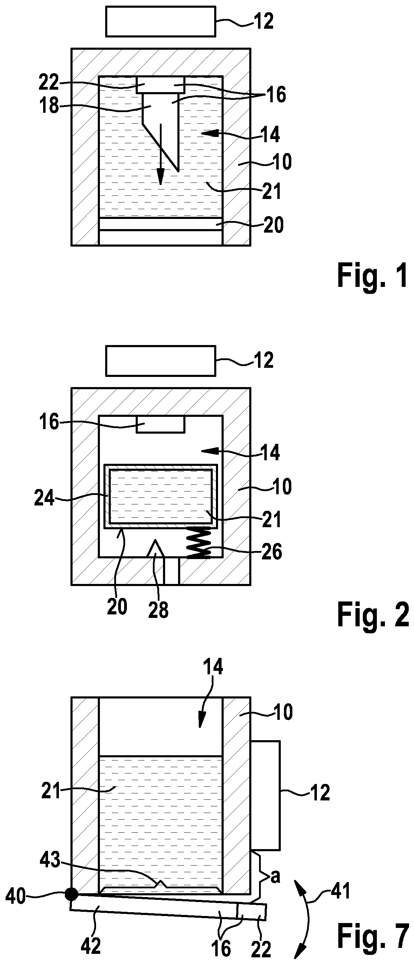

Fig. 1 zeigt eine schematische Darstellung einer ersten Ausführungsform eines Reagenzgefäß-Einsetzteils der Erfindung. Das in Fig. 1 (zumindest teilweise) schematisch dargestellte Reagenzgefäß-Einsetzteil weist ein Einsetzteilgehäuse 10 auf, welches so ausgebildet ist, dass das Reagenzgefäß-Einsetzteil in einem Reagenzgefäß für eine Zentrifuge und/oder für eine Druckvariiervorrichtung einsetzbar ist. Außerdem hat das Reagenzgefäß-Einsetzteil (mindestens) einen Magneten 12, welcher in Bezug zu dem Einsetzteilgehäuse 10 unverstellbar angeordnet/befestigt ist. Das Reagenzgefäß-Einsetzteil weist auch mindestens ein in einem Innenvolumen 14 des Reagenzgefäß-Einsetzteils angeordnetes Stellelement 16 auf.

Das mindestens eine Stellelement 16 ist mittels der bei einem Betrieb der Zentrifuge, in deren Rotoreinrichtung das Reagenzgefäß mit dem darin eingesetzten Reagenzgefäß-Einsetzteil angeordnet ist, bewirkbaren Zentrifugalkraft (größer als der magnetischen Anziehungskraft) und/oder mittels der bei einem Betrieb der Druckvariiervorrichtung, in welcher das Reagenzgefäß mit dem darin eingesetzten Reagenzgefäß-Einsetzteil angeordnet ist, bewirkbaren Druckkraft (größer als der magnetischen Anziehungskraft) in Bezug zu dem mindestens einen Magneten 12 verstellbar. Bei der dargestellten Ausführungsform können mittels des in Bezug zu dem mindestens einen Magneten 12 verstellten mindestens einen Stellelements 16 eine Schneidekante 18, eine Spitze und/oder ein Dorn in einen Kontakt mit einer mittels der Scheidekante 18, der Spitze und/oder des Dorn durchdringbare Schicht 20 bringbar sein. Bei der Ausführungsform der Fig. 1 ist das Stellelement 16 selbst, bzw. eine Untereinheit davon, als Schneidkante 18 (Schneide) ausgebildet. Zusätzlich weist das Stellelement 16 noch eine Untereinheit 22 auf, welche aus einem magnetisch anziehbaren Material gebildet ist. Somit ist es nicht notwendig, für die Ausbildung der Schneidekante 18, der Spitze und/oder des Dorns ein magnetisch anziehbares Material zu verwenden.

Wird das Stellelement 16 aufgrund einer Kraft größer als der magnetischen Anziehungskraft des mindestens einen Magneten 12 beschleunigt, so kann es eine kinetische Energie aufnehmen, welche ausreichend ist, um die beispielsweise als Folie, Siegelung oder Membran ausgebildete durchdringbare Schicht 20 zu durchschlagen/durchtrennen. Auf diese Weise kann beispielsweise eine mittels der durchdringbaren Schicht 20 zurückgehaltene Flüssigkeit 21 freigelassen werden. Man kann dies auch so umschreiben, dass mittels eines Durchtrennens der Schicht 20 ein fluidischer Pfad geöffnet werden kann. Die freisetzbare Flüssigkeit 21 kann in einer Gefäßstruktur gelagert sein, in welcher auch das mindestens eine Stellelement 16 angeordnet ist. Ebenso kann das extern von der mit der Flüssigkeit 21 befüllten Gefäßstruktur angeordnete mindestens eine Stellelement 16 von der Zentrifugalkraft/Druckkraft auf die durchdringbare Schicht 20 zubewegt werden.

Die Ausführungsform der Fig. 1 realisiert somit ein aus dem mindestens einen Magneten 12 und dem mindestens einen Stellelement 16 gebildetes magnetisches System, welches als Öffnungsmechanismus/Aufschneidemechanismus zum gezielten Öffnen/Aufschneiden einer Gefäßstruktur und/oder als Durchtrennmechanismus zum Durchtrennen einer Schicht 20 bezeichenbar ist. Somit kann durch die Wahl der Drehgeschwindigkeit, des Unterdrucks und/oder des Überdrucks ein Zeitpunkt zum gezielten Freilassen mindestens einer Flüssigkeit 21 festgelegt werden. Die auf diese Weise freigelassene/ausströmende Flüssigkeit 21 kann mit einem Material/Probenmaterial anschließend mindestens eine Reaktion ausführen.

Fig. 2 zeigt eine schematische Darstellung einer zweiten Ausführungsform des Reagenzgefäß-Einsetzteils der Erfindung. Das in Fig. 2 (zumindest teilweise) schematische wiedergegebene Reagenzgefäß-Einsetzteil ist eine weitere Realisierung eines aus dem mindestens einen Magneten 12 und dem mindestens einen Stellelement 16 gebildeten magnetischen Systems, welches als Öffnungsmechanismus, Aufschneidemechanismus und/oder Druchtrennmechanismus einsetzbar ist. Das mittels einer Kraft größer als der magnetischen Anziehungskraft des Magneten 12 beschleunigte Stellelement 16 kontaktiert bei der Ausführungsform der Fig. 2 während des Ausführens der von dem mindestens einen Magneten 12 weg gerichteten Bewegung eine Gefäßkomponente 24, welche mittels einer elastischen Komponente 26 beabstandet von einem Dorn 28, einer Schneidekante und/oder einer Spitze gehalten wird und mit einer Flüssigkeit 21 gefüllt ist. Das mittels der Zentrifugalkraft/Druckkraft beschleunigte mindestens eine Stellelement 16 bewegt die Gefäßkomponente 24 anschließend auf den Dorn 28, die Schneidekante und/oder die Spitze zu. Die Schicht 20 der Gefäßkomponente 24 wird auf diese Weise gegen den Dorn 28, die Schneidekante und/oder die Spitze gedrückt, sodass eine Aussparung/ein Flüssigkeitsauslass in der Schicht 20 gebildet wird. Somit ist auch mittels der Ausführungsform der Fig. 2 ein gezieltes Freisetzen der in der Gefäßkomponente 24 eingefüllten Flüssigkeit 21 zu einem frei wählbaren/einstellbaren Zeitpunkt möglich.

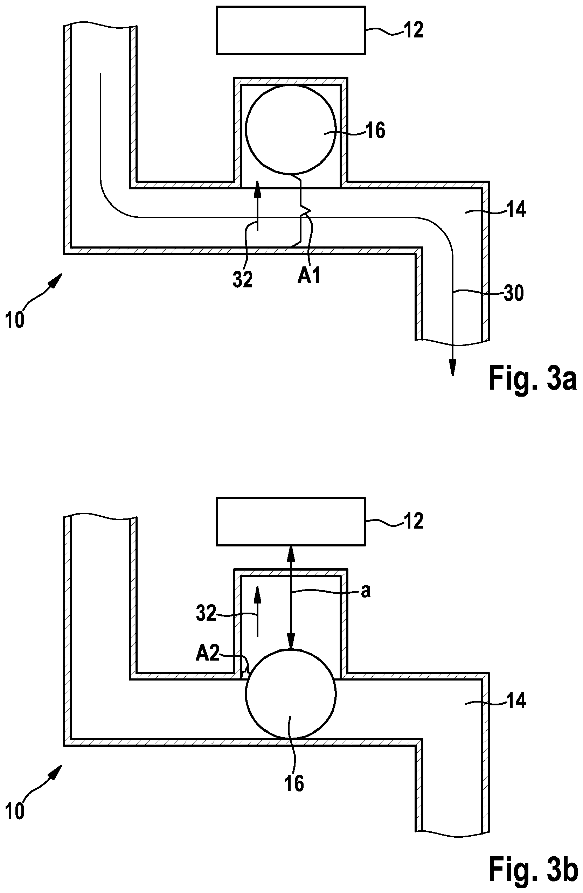

Fig. 3a und 3b zeigen schematische Darstellungen eines nicht beanspruchten Reagenzgefäß-Einsetzteils.

Bei dem in Fig. 3a und 3b (zumindest teilweise) schematisch wiedergegebenen Reagenzgefäß-Einsetzteil ist das mindestens eine Stellelement 16 mittels der Zentrifugalkraft/Druckkraft aus mindestens einer Ausgangsstellung in mindestens eine Betriebsstellung in Bezug zu dem mindestens einen Magneten 12 verstellbar.

Fig. 3a zeigt das mindestens eine Stellelement 16 in seiner Ausgangsstellung. Zwischen dem in seiner Ausgangsstellung vorliegenden mindestens einen Stellelement 16 und einer Umgebung des in seiner Ausgangsstellung vorliegenden mindestens einen Stellelements 16 liegt eine erste (Gesamt-)Durchströmfläche A1 vor. In Fig. 3b ist das mindestens eine Stellelement 16 in seiner Betriebsstellung wiedergegeben. Zwischen dem mindestens einen in seiner Betriebsstellung vorliegenden mindestens einen Stellelement 16 und einer Umgebung des in seiner Betriebsstellung vorliegenden mindestens einen Stellelements 16 liegt eine zweite (Gesamt-)Durchströmfläche A2 vor, welche ungleich der ersten Durchströmfläche A1 ist. (Unter der ersten (Gesamt-)Durchströmfläche A1 und der zweiten (Gesamt-)Durchströmfläche A2 können auch Gesamtdurchströmflächen aus mehreren Durchströmflächen verschiedener Spalten zwischen jedem Stellelement 16 und seiner Umgebung in seiner jeweiligen Stellung verstanden werden.)

Das aus dem mindestens einen Magneten 12 und dem mindestens einen Stellelement 16 gebildete magnetische System realisiert somit eine Drossel, mittels welcher ein durch das Innenvolumen 14 führbarer Flüssigkeitsstrom 30 steuerbar ist. Sofern die erste (Gesamt-)Durchströmfläche A1 größer als die zweite (Gesamt-)Durchströmfläche A2 ist, wird durch eine Zentrifugalkraft/Druckkraft größer als der magnetischen Anziehungskraft des mindestens Magneten 12 eine Drosselung des durch das Innenvolumen 14 führbaren Flüssigkeitsstroms 30 bewirkt. Somit ist die Stromdichte des durch das Innenvolumen 14 geleiteten Flüssigkeitsstroms 30 mittels der Zentrifugalkraft/Druckkraft gezielt steuerbar.

Das in den Fig. 3a und 3b dargestellte vorteilhafte magnetische System, welches als Drossel einsetzbar ist, ist auf einfache Weise realisierbar, indem das Innenvolumen 14 zumindest teilweise als Kanal ausgebildet wird, welcher im Wirkungsbereich der magnetischen Anziehungskraft des mindestens einen Magneten 12 mindestens eine Ausbuchtung 32 aufweist, in welche das mindestens eine Stellelement 16 zumindest teilweise passt. Die magnetische Anziehungskraft des mindestens einen Magneten 12 bewirkt somit ein Herausverstellen des mindestens einen Stellelements 16 aus dem Kanal, wodurch die vorteilhaft große erste (Gesamt-)Durchströmfläche A1 für den Flüssigkeitsstrom 30 freigelegt wird. Mittels einer Zentrifugalkraft/Druckkraft größer als der magnetischen Anziehungskraft des Magneten 12 kann das mindesten eine Stellelement 16 aus der mindestens einen Ausbuchtung 32 in den Kanal verstellt werden, wodurch der Flüssigkeitsstrom 30 auf einfache Weise gedrosselt wird.

Es wird darauf hingewiesen, dass die realisierbare Drossel/Drosselung abhängig von einem (mittleren) Abstand a zwischen dem mindestens einen Magneten 12 und dem mindestens einen in seiner mindestens einen Betriebsstellung vorliegenden Stellelement 16 reversibel auslegbar ist. Sofern die magnetische Anziehungskraft des mindestens einen Magneten 12 ausreichend ist, das im Abstand a dazu angeordnete mindestens eine Stellelement 16 noch aus seiner mindestens einen Betriebsposition in die mindestens eine Ausgangsstellung zurück zu ziehen, kann das mindestens eine Stellelement 16 bei einem Nachlassen/einer Reduzierung der darauf ausgeübten Zentrifugalkraft/Druckkraft wieder in seine (ursprüngliche) mindestens eine Ausgangsstellung zurück bewegt werden. Sofern dies gewünscht wird, kann in diesem Fall das mindestens eine Stellelement 16 zu einem späteren Zeitpunkt erneut zur Drosselung des Flüssigkeitsstroms 30 in seine Betriebsstellung mittels einer ausreichend großen Zentrifugalkraft/Druckkraft verstellt werden.

Zur Realisierung eines reversiblen magnetischen Systems kann die Rückführung des mindestens einen Stellelements 16 in die Ausgangsstellung/Ruheposition auch durch ein (nicht skizziertes) elastisches Element unterstützt werden. Als elastisches Element können beispielsweise ein Elastomer und/oder eine Federmechanik eingesetzt werden. Das elastische Element und das mindestens eine Stellelement 16 können als zwei separate Bauteile ausgelegt werden. Ebenso ist es möglich, das mindestens eine Stellelement 16 mit einem elastischen Element als einstückiges/einteiliges Bauteil auszubilden. Beispielsweise kann das mindestens eine Stellelement 16 ein mit einem elastischen Material (Elastomer/Polymer) zumindest teilbeschichtetes magnetisches Partikel sein. Als Ergänzung oder als Alternative dazu kann ein als das mindestens eine Stellelement 16 verwendbares magnetisches Partikel mit einer Feder verbunden oder in eine Feder integriert sein.

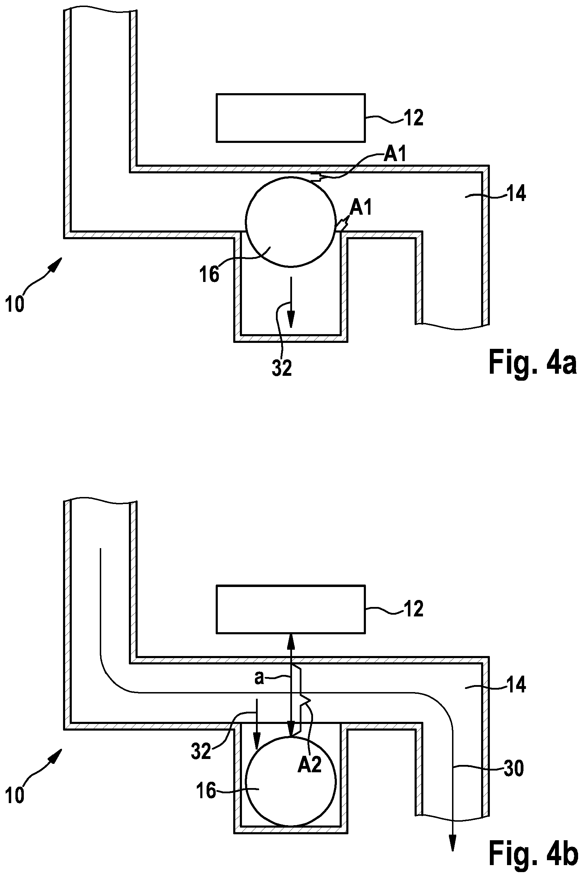

Fig. 4a und 4b zeigen schematische Darstellungen eines nicht beanspruchten Reagenzgefäß-Einsetzteils.

Bei dem in Fig. 4a und 4b (zumindest teilweise) schematisch dargestellten Reagenzgefäß-Einsetzteil ist die erste (Gesamt-)Durchströmfläche A1 zwischen dem mindestens einen Stellelement 16 und einer Umgebung des in seiner Ausgangsstellung vorliegenden mindestens einen Stellelements 16 kleiner als die zweite (Gesamt-) Durchströmfläche A2 zwischen dem in seiner Betriebsstellung vorliegenden mindestens einen Stellelement 16 und einer Umgebung des in seiner Betriebsstellung vorliegenden mindestens einen Stellelements 16. Das magnetische System der Fig. 4a und 4b realisiert somit eine Drossel, mittels welcher ein Flüssigkeitsstrom 30 durch das Verstellen des mindestens einen Stellelements 16 in seine mindestens eine Betriebsstellung steigerbar und durch das Verstellen des mindestens einen Stellelements 16 in seine mindestens eine Ausgangsstellung reduzierbar/drosselbar ist. (Die Fließrichtung des Flüssigkeitsstroms 30 kann abweichend von der Bewegungsrichtung des mittels der Zentrifugalkraft/Druckkraft bewegten Stellelements 16 sein.)

Beispielsweise wird das mindestens eine Stellelement 16 in seiner mindestens einen Ausgangsstellung mittels der magnetischen Anziehungskraft (mittig) in einem Kanal gehalten, an welchem mindestens eine Ausbuchtung 32 nahe an dem mindestens einen Stellelement 16 ausgebildet ist. Bei einer Zentrifugalkraft/Druckkraft über der magnetischen Anziehungskraft wird das mindestens eine Stellelement 16 in der mindestens einen Ausbuchtung 32 als seiner mindestens einen Betriebsstellung aufgefangen/gehalten.

Mittels einer Festlegung eines (mittleren) Abstands a des in seiner mindestens einen Betriebsstellung vorliegenden mindestens einen Stellelements 16 zu dem mindestens einen Magneten 12 und der Parameter des mindestens einen Magneten 12 kann auch das in den Fig. 4a und 4b wiedergegebene Reagenzgefäß-Einsetzteil als reversible Drossel ausgebildet werden. Dieser Vorteil ist auch bewirkbar, indem die Rückführung des mindestens einen Stellelements 16 in die Ausgangsstellung/Ruheposition mittels eines (nicht skizzierten) elastischen Elements unterstützt wird.

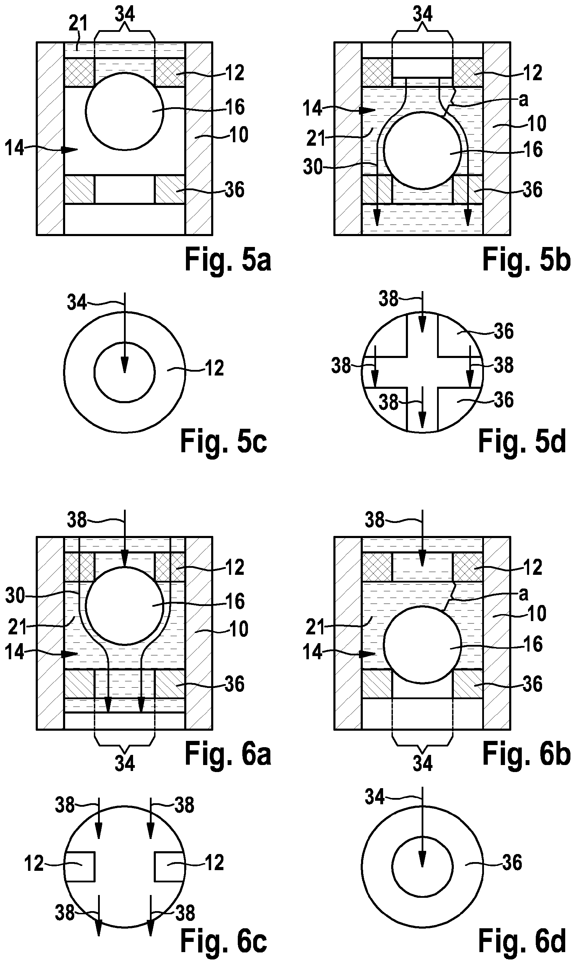

Fig. 5a bis 5d zeigen schematische Darstellungen eines nicht beanspruchten Reagenzgefäß-Einsetzteils.

Das in den Fig. 5a bis 5d (zumindest teilweise) schematisch wiedergegebene Reagenzgefäß-Einsetzteil weist ein aus zumindest dem mindestens einen Magneten 12 und dem mindestens einen Stellelement 16 gebildetes magnetisches System auf, welches ein Ventil realisiert. Sofern das mindestens eine Stellelement 16 keine Zentrifugalkraft/Druckkraft größer als der magnetischen Anziehungskraft des Magneten 12 erfährt, ist das realisierte Ventil geschlossen. Dies ist gewährleistet, da das mindestens eine Stellelement 16 in seiner mindestens einen Ausgangsstellung einen in dem Innenvolumen 14 ausgebildeten Kanalverengungsbereich 34 flüssigkeitsdicht verschließt (siehe Fig. 5a). Durch das Ausüben einer Zentrifugalkraft/Druckkraft größer als der magnetischen Anziehungskraft des mindestens einen Magneten 12 auf das mindestens eine Stellelement 16 kann das Ventil geöffnet werden.

Bei dem Reagenzgefäß-Einsetzteil der Fig. 5a bis 5d ist das Innenvolumen 14 zumindest teilweise als fluidischer Kanal mit einem Kanalverengungsbereich 34, welchen das mindestens eine Stellelement 16 in seiner mindestens einen Ausgangsstellung/Ruheposition vollständig abdeckt/blockiert, ausgebildet. Zum Ausbilden des Kanalverengungsbereichs 34 ist bei dem dargestellten Reagenzgefäß-Einsetzteil ein die Querschnittsfläche des Kanals verengender ringförmiger Magnet 12 in den Kanal integriert. (Der ringförmige Magnet 12 ist in Fig. 5c skizziert.) Als das mindestens eine Stellelement 16 kann eine Kugel, welche zumindest teilweise aus einem magnetisch-anziehbaren Material besteht, eingesetzt werden.

Mittels einer Zentrifugalkraft/Druckkraft größer als der magnetischen Anziehungskraft des Magneten 12 wird das mindestens eine Stellelement 16 in Richtung des Kraftvektors auf eine Fängerstruktur 36 zubewegt, mittels welcher eine Betriebsstellung des mindestens einen Stellelements 16, bzw. ein (mittlerer) Abstand a zwischen dem in seiner Betriebsstellung vorliegenden mindestens einen Stellelement 16 und dem mindestens einen Magneten 12, festlegbar ist (siehe Fig. 5b). Wie in Fig. 5d zu erkennen ist, weist die Fängerstruktur 36 mindestens einen Beipass 38 auf, welcher von dem in seiner Betriebsstellung vorliegenden mindestens einen Stellelement 16 nicht abgedeckt wird. Somit kann Flüssigkeit 21 das in seiner Betriebsstellung vorliegende mindestens eine Stellelement 16 umströmen und durch den mindestens einen Beipass 38 durch die Fängerstruktur 36 fließen.

Durch eine Festlegung des Abstands a und/oder der Parameter des Magneten 12 kann das anhand der Fig. 5a bis 5d wiedergegebene Ventil reversibel ausgelegt werden. Sofern die magnetische Anziehungskraft aufgrund des Abstands a und der Parameter des Magneten 12 ausreichend dazu ist, kann das mindestens eine Stellelement 16 mittels des Magneten 12 bei einem Nachlassen der Zentrifugalkraft/Druckkraft wieder aus einer Betriebsstellung in seine Ausgangsstellung zurück verstellt werden und den fluidischen Kanal erneut verschließen. Durch ein erneutes Steigern der Zentrifugalkraft/Druckkraft kann das mindestens eine Stellelement 16 wieder in seine Betriebsstellung bewegen werden, wodurch das Ventil erneut in einen offenen Zustand steuerbar ist. Es wird darauf hingewiesen, dass der in diesem Absatz beschriebene Vorgang beliebig oft und/oder periodisch wiederholbar ist.

Fig. 6a bis 6d zeigen schematische Darstellungen eines nicht beanspruchten Reagenzgefäß-Einsetzteils.

Das in den Fig. 6a bis 6d (zumindest teilweise) wiedergegebene Reagenzgefäß-Einsetzteil umfasst ein aus dem mindestens einen Magneten 12 und dem mindestens einen Stellelement 16 gebildetes magnetisches System, bei welcher das Stellelement 16 in seiner Betriebsstellung einen in den Innenvolumen 14 ausgebildeten Kanalverengungsbereich 34 verschließt (siehe Fig. 6b). Das Reagenzgefäß-Einsetzteil der Fig. 6a bis 6d realisiert somit ein Ventil, welches bei Fehlen einer die magnetische Anziehungskraft des Magneten 12 aufhebende Zentrifugalkraft/Druckkraft in einem offenen Zustand vorliegt.

Beispielsweise ist der mindestens eine Magnet 12, welcher in Fig. 6c in Draufsicht dargestellt ist, so ausgebildet, dass selbst bei einem Vorliegen des mindestens einen Stellelements 16 in seiner Ausgangsstellung noch ein freiliegender Beipass 38 vorliegt, durch welchen der Flüssigkeitsstrom 30 fließen kann. Somit kann der Flüssigkeitsstrom 30 das mindestens eine Stellelement 16 in seiner Ausgangsstellung/Ruheposition umströmen, durch den freiliegender Beipass 38 fließen und durch das zumindest teilweise als Kanal ausgebildete Innenvolumen 14 geleitet werden (siehe Fig. 6a). Der Kanal kann geschlossen werden, indem das mindestens eine Stellelement 16 mittels einer die magnetische Anziehungskraft des Magneten 12 überwiegenden Zentrifugalkraft/Druckkraft mit einer entlang dem Kraftvektor gerichteten Bewegungskomponente in mindestens eine Betriebsposition gestellt wird, in welcher das mindestens Stellelement 16 einen Kanalverengungsbereich 34 (vollständig) abdeckt/blockiert. Zum Ausbilden einer geeigneten Kanalverengungsbereich 34 kann eine ringförmige Fängerstruktur 36, wie in Fig. 6d dargestellt, in dem Kanal befestigt werden. Ein von der ringförmigen Fängerstruktur 36 umrahmter Kanalverengungsbereich 34 kann in diesem Fall verlässlich mittels mindestens eines kugelförmig ausgebildeten Stellelements 16 so blockiert/abgedeckt werden, dass der Flüssigkeitsstrom 30 zum Erliegen kommt.

Auch das in den Fig. 6a bis 6d wiedergegebene Reagenzgefäß-Einsetzteil kann mittels einer geeigneten Festlegung eines Abstands a zwischen dem Magneten 12 und dem in seiner Betriebsposition vorliegenden mindestens einem Stellelement 16, der Parameter des Magneten 12 und/oder ein elastisches Element reversibel ausgelegt werden.

Fig. 7 zeigt eine schematische Darstellung eines nicht beanspruchten Reagenzgefäß-Einsetzteils.

Das in Fig. 7 (zumindest teilweise) schematisch dargestellte Reagenzgefäß-Einsetzteil weist eine um ein Scharnier 40 drehbare Schließeinrichtung als das mindestens eine Stellelement 16 auf. Beispielsweise kann das Stellelement 16 über das Scharnier 40 an einer Öffnung 43 einer Gefäßstruktur befestigt sein. Das Stellelement kann eine Untereinheit 22 aus einem magnetisch anziehbaren Material umfassen, welches an einem von dem Scharnier 40 weg gerichteten Ende des Stellelements 16 benachbart zu dem mindestens einen Magneten 12 angeordnet ist. Außerdem kann das Stellelement 16 noch eine Siegelplatte 42 zum (flüssigkeitsdichten und/oder gasdichten) Abdecken der Öffnung 43 aufweisen, für deren Ausbildung auch ein nicht-magnetisch anziehbares Material verwendet werden kann.

Sofern keine Zentrifugalkraft/Druckkraft die magnetische Anziehungskraft des mindestens einen Magneten 12 aufhebt, verbleibt das Stellelement 16 in seiner Ausgangsstellung und deckt mit seiner Siegelplatte 42 die Öffnung 43 der Gefäßstruktur ab. Erst ab einer die magnetische Anziehungskraft aufhebenden Zentrifugalkraft/Druckkraft wird das Stellelement 16 entlang einer Teilkreisbahn 41 bewegt und um das Scharnier 40 gedreht, wodurch die Öffnung 43 der Gefäßstruktur "aufgeklappt" wird. Das aus dem mindestens einen Magneten 12 und dem mindestens einen Stellelement 16 ausgebildete magnetische System realisiert somit eine Schließeinrichtung, bzw. einen Klappmechanismus.

Durch eine geeignete Festlegung des Abstands a des in seiner Betriebsstellung vorliegenden Stellelements 16 zu dem mindestens einen Magneten 12, der Parameter des mindestens einen Magneten 12 und/oder ein elastisches Element kann die Schließeinrichtung/derKlappmechanismus auch reversibel ausgelegt werden. In diesem Fall kann ein Nachlassen/eine Reduzierung der Zentrifugalkraft/Druckkraft ein Wiederverschließen der mittels des Stellelements 16 abdichtbaren Öffnung 43 bewirken.

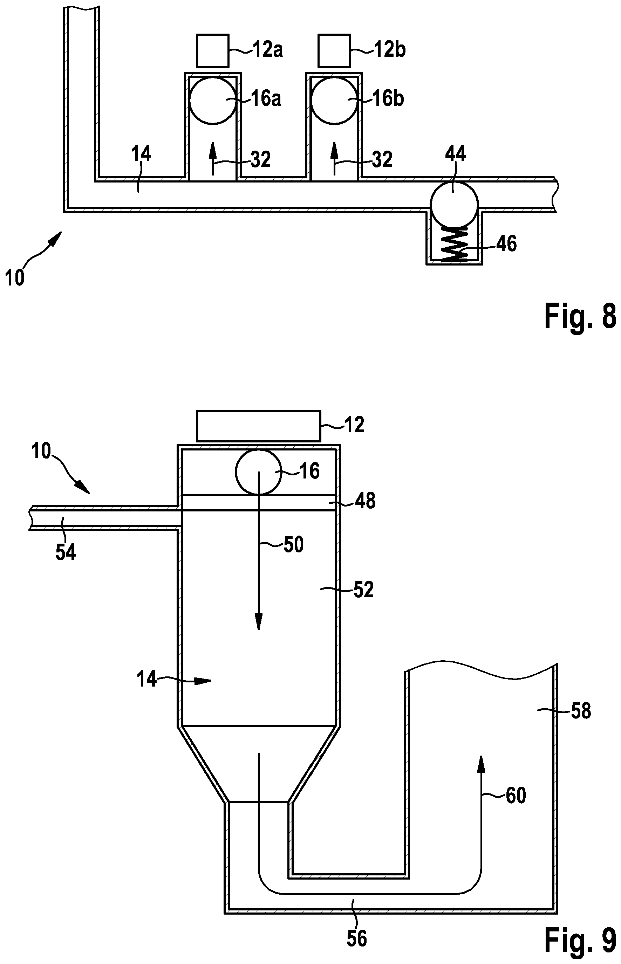

Fig. 8 zeigt eine schematische Darstellung eines nicht beanspruchten Reagenzgefäß-Einsetzteils.

Das in der Fig. 8 (zumindest teilweise) schematisch dargestellte Reagenzgefäß-Einsetzteil umfasst ein erstes Stellelement 16a und ein zweites Stellelement 16b. Das erste Stellelement 16a und das zweite Stellelement 16b liegen in ihren Ausgangsstellungen in jeweils einer Ausbuchtung 32 des zumindest teilweise als Kanal ausgebildeten Innenvolumens 14 vor. Dem ersten Stellelement 16a und dem zweiten Stellelement 16b sind jeweils ein erster Magnet 12a und ein zweiter Magnet 12b zugeordnet. Bei dem Reagenzgefäß-Einsetzteil der Fig. 8 weist das Zentrifugen-Einsetzteil auch ein Abdichtelement 44 auf, wobei zwischen dem Abdichtelement 44 und einer Wand einer dem Abdichtelement 44 zugeordneten weiteren Ausbuchtung 32 eine elastische Komponente 46 angeordnet ist. Sofern keine weitere Kraft auf das Abdichtelement 44 wirkt, wird das Abdichtelement 44 mittels der elastischen Komponente 46 zumindest teilweise aus der ihm zugeordneten Ausbuchtung 32 heraus gedrückt.

Mittels einer ersten Zentrifugalkraft/Druckkraft größer als einer ersten magnetischen Anziehungskraft des ersten Magneten 12a auf das erste Stelleelement 16a kann das erste Stellelement 16a aus seiner Ausbuchtung 32 in den Kanal verstellt werden, wodurch ein Teilbereich des Kanals, an welchem die Ausbuchtung 32 des zweiten Stellelements 16b liegt, an seinem ersten Ende mittels des ersten Stellelements 16a und an seinem zweiten Ende mittels des Abdichtelements 44 abgedichtet wird. Wird die Zentrifugalkraft weiter erhöht, sodass auch eine zweite magnetische Anziehungskraft des zweiten Magneten 12b auf das zweite Stellelement 16b überschritten wird, so bewirkt das Verstellen des zweiten Stellelements 16b in den an seinen beiden Enden abgedichteten Kanalverengungsbereich einen Überdruck, wodurch das Abdichtelement 44 entgegen einer Gegenkraft der elastischen Komponente 46 in die ihm zugeordnete Ausbuchtung 32 gedrückt und Flüssigkeit 21 aus dem Kanalverengungsbereich gepumpt wird. Es wird darauf hingewiesen, dass der erzeugbare Überdruck für ein Pumpen der Flüssigkeit 21 entgegen der Zentrifugalkraft/Druckkraft ausreichen kann. Bei einem Nachlassen/einer Reduzierung der Zentrifugalkraft/Druckkraft kehren die beiden Stellelemente 16a und 16b und das Abdichtelement 44 wieder in ihre Ausgangsstellungen zurück. Somit ist der in diesem Absatz beschriebene Pumpvorgang beliebig oft wiederholbar. Das Reagenzgefäß-Einsetzteil der Fig. 8 realisiert somit eine Pumpeinrichtung/Pumpe.

Fig. 9 zeigt eine schematische Darstellung eines nicht beanspruchten Reagenzgefäß-Einsetzteils.

Das in Fig. 9 (zumindest teilweise) schematisch dargestellte Reagenzgefäß-Einsetzteil stellt ein weiteres Beispiel für eine mittels des mindestens einen Magneten 12 und des mindestens einen Stellelements 16 realisierbare Pumpeinrichtung/Pumpe dar. Das mindestens eine Stellelement 16 kontaktiert bei dem dargestellten Reagenzgefäß-Einsetzteil ein

Abdichtelement 48, welches in einer Pumpkammer 52 mit einem Einlass 54 und einem Auslass 56 verstellbar angeordnet ist. Während eines Vorliegens des mindestens einen Stellelements 16 in seiner Ausgangsstellung wird das Abdichtelement 48 so von dem Einlass 54 ferngehalten, dass ein Befüllen der Pumpkammer 52 mit einer Flüssigkeit 21 oder einem Gas über den Einlass 54 möglich ist. Bei einer die magnetische Anziehungskraft des Magneten 12 übersteigenden Zentrifugalkraft/Druckkraft bewegt das mindestens eine Stellelement 16 das Abdichtelement 58 entlang einer Richtung 50 auf den Auslass 56 zu, wobei das den Querschnitt der Pumpkammer 52 (flüssigkeitsdicht und/oder gasdicht) abdeckende Abdichtelement 48 das darin eingefüllte Material als Flüssigkeits- oder Gasstrom 60 durch den Auslass 56 drückt.

Ein Nachlassen/eine Reduzierung der Zentrifugalkraft/Druckkraft kann ein Zurückverstellen des mindestens einen Stellelements 16 und des Abdichtelements 58 bewirken. Der in dem vorausgehenden Absatz beschriebene Pumpvorgang ist somit beliebig oft wiederholbar. Mittels eines mehrmaligen, insbesondere periodischen Wiederholens des Pumpvorgangs kann eine beträchtliche Flüssigkeitsmenge oder Gasmenge durch den Auslass 56 in ein daran angebundenes Volumen 58 gepumpt werden. Es wird darauf hingewiesen, dass die hier beschriebene Pumpeinrichtung auch dazu verwendet werden kann, eine Flüssigkeit 21 oder ein Gas entgegen der Zentrifugalkraft/Druckkraft in das angebundene Volumen 58 zu pumpen.

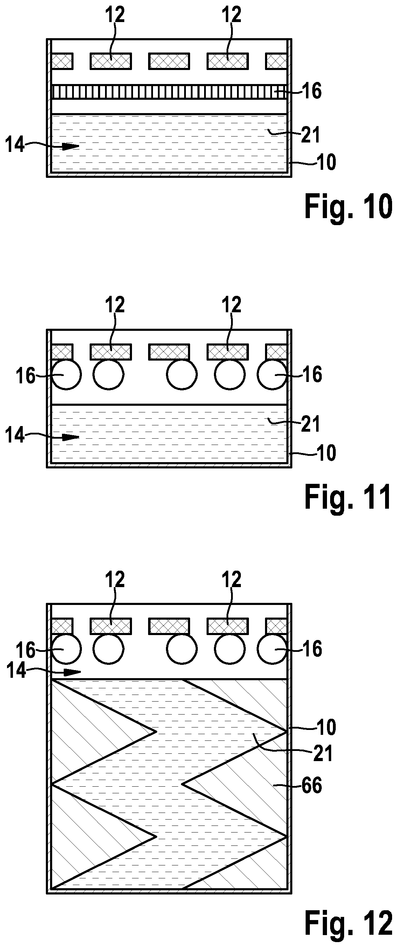

Fig. 10 zeigt eine schematische Darstellung eines nicht beanspruchten Reagenzgefäß-Einsetzteils.

Das in Fig. 10 (zumindest teilweise) schematisch dargestellte Reagenzgefäß-Einsetzteil mit mindestens einem als Sieb ausgebildeten Stellelement 16 realisiert eine Mischeinrichtung zum Mischen einer in dem Innenvolumen 14 vorliegenden Flüssigkeit 21. Dazu wird das mindestens eine Stellelement 14 vorzugsweise reversibel zwischen seiner Ausgangsstellung und mindestens einer Betriebsstellung hin- und her bewegt. Auf diese Weise lassen sich auch mindestens zwei Flüssigkeiten effizient miteinander mischen.

Fig. 11 zeigt eine schematische Darstellung eines nicht beanspruchten Reagenzgefäß-Einsetzteils. Das Reagenzgefäß-Einsetzteil der Fig. 11 weist mehrere Stellelemente 16 auf, welche beispielsweise als Kugeln oder Beads ausgebildet sind. Wird die magnetische Anziehungskraft des mindestens einen Magneten 12 nicht von einer Zentrifugalkraft oder Druckkraft aufgehoben, so liegen die Stellelemente 16 in ihren Ausgangsstellungen vor. Bei einer Zentrifugalkraft/Druckkraft über der magnetischen Anziehungskraft bewegen sich die Stellelemente 16 und erzeugen ein Strömungsprofil in der Flüssigkeit 21. Ein Nachlassen/eine Reduzierung der Zentrifugalkraft/Druckkraft bewirkt hingegen ein erneutes Anziehen der Stellelemente 16 in ihre Ausgangsstellungen mittels der magnetischen Anziehungskraft des Magneten 12. Durch eine periodische Erhöhung und Erniedrigung der um einen Schwellwert gleich der magnetischen Anziehungskraft variierenden Zentrifugalkraft/Druckkraft kann somit ein vorteilhafter Mischeffekt bewirkt werden.

Fig. 12 zeigt eine schematische Darstellung eines nicht beanspruchten Reagenzgefäß-Einsetzteils. Das Reagenzgefäß-Einsetzteil der Fig. 12 weist als Ergänzung zu dem vorhergehenden Reagenzgefäß-Einsetzteil zusätzliche Hindernisstrukturen in dem zumindest teilweise als Mischkammer fungierenden Innenvolumen 14 auf. Beispielsweise kann das Innenvolumen 14 einen Zick-Zack-Kanal 66 als Mischkammer umfassen, wodurch ein Dean-Effekt ausbildbar ist.

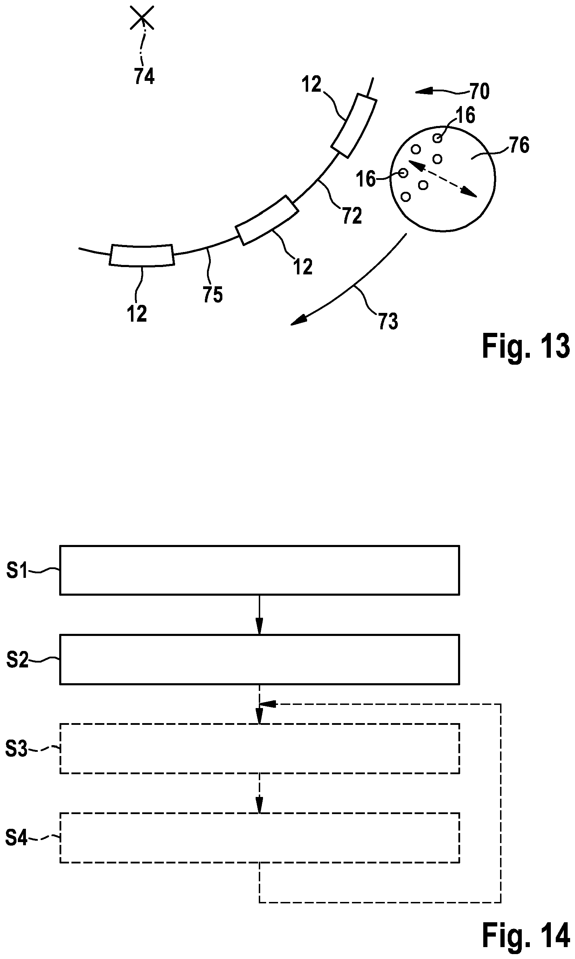

Fig. 13 zeigt eine schematische Darstellung einer Zentrifuge zum Erläutern einer Ausführungsform des Verfahrens zum Zentrifugieren eines Materials.

Die in Fig. 13 schematisch dargestellte Zentrifuge 70 weist eine Rotoreinrichtung 72 auf, welche mit einer variierenden Drehgeschwindigkeit entlang einer Kreisbahn 73 um ein Rotationszentrum 74 rotieren kann. Mittels der Zentrifuge 70 kann beispielsweise eine Zentrifugal-Beschleunigung von bis zu 10000 g bewirkbar sein. Die für das Verfahren verwendbare Zentrifuge 70 ist jedoch nicht auf eine bewirkbare Höchst- oder Mindest-Zentrifugal-Beschleunigung beschränkt.

Zum Ausführen des Verfahrens wird das zu zentrifugierende Material 76 (z.B. ein Probenmaterial) in ein Reagenzgefäß mit einem darin eingesetzten Reagenzgefäß-Einsetzteil oder in ein mit der vorteilhaften Technologie ausgestattetes Reagenzgefäß eingefüllt. Das mit dem Material 76 zusammenwirkende Reagenzgefäß-Einsetzteil/Reagenzgefäß weist mindestens einen Magneten 12 und mindestens ein Stellelement 16 auf. (Der mindestens eine Magnet 12 kann an einer Halterung 75 angeordnet sein.) Es wird darauf hingewiesen, dass alle oben beschriebenen Ausführungsformen des Reagenzgefäß-Einsetzteils/Reagenzgefäßes zum Ausführen des Verfahrens verwendet werden können. Die Ausführbarkeit des Verfahrens ist jedoch nicht auf eine Verwendung der oben beschriebenen Ausführungsformen des Reagenzgefäß-Einsetzteils/Reagenzgefäßes limitiert. Ebenso ist die Ausführbarkeit des Verfahrens nicht auf ein bestimmtes zu zentrifugierendes Material beschränkt.

Während des Verfahrens wird die Zentrifuge 70 zumindest mit einer aktuellen Drehgeschwindigkeit entsprechend einer ersten Soll-Drehgeschwindigkeit, welche auf das mindestens eine Stellelement eine erste Zentrifugalkraft größer als die darauf ausgeübte magnetische Anziehungskraft bewirkt, für ein erstes Zeitintervall betrieben. Auf diese Weise kann das zumindest aus dem mindestens einen Magneten 12 und dem mindestens einen Stellelement 16 gebildete magnetische System als Aufschneidemechanismus, als Durchtrennmechanismus, als Drossel, als Ventil, als Schließeinrichtung, als Klappmechanismus, als Pumpe und/oder als Mischeinrichtung betätigt werden.

In einer vorteilhaften Ausführungsform des Verfahrens erfolgt nach dem ersten Zeitintervall zumindest ein einmaliges zwischenzeitliches Reduzieren der aktuellen Drehgeschwindigkeit auf eine zweite Soll-Drehgeschwindigkeit, welche auf das mindestens eine Stellelemente eine zweite Zentrifugalkraft kleiner als die darauf ausgeübte magnetische Anziehungskraft bewirkt, für ein zweites Zeitintervall und anschließend ein Erhöhen der aktuellen Drehgeschwindigkeit auf eine dritte Soll-Drehgeschwindigkeit, welche auf das mindestens eine Stellelemente eine dritte Zentrifugalkraft größer als die darauf ausgeübte magnetische Anziehungskraft bewirkt, für ein drittes Zeitintervall. Die dritte Soll-Drehgeschwindigkeit kann gleich der ersten Soll-Drehgeschwindigkeit sein. Dies bewirkt beispielsweise ein zusätzliches Mischen des zu zentrifugierenden Materials 66.

Fig. 14 zeigt ein Flussdiagramm zum Erläutern einer Ausführungsform des Verfahrens zum Druckbehandeln eines Materials.

Es wird darauf hingewiesen, dass alle oben beschriebenen Ausführungsformen des Reagenzgefäß-Einsetzteils/Reagenzgefäßes zum Ausführen des Verfahrens verwendet werden können. Die Ausführbarkeit des Verfahrens ist jedoch nicht auf eine Verwendung der oben beschriebenen Ausführungsformen des Reagenzgefäß-Einsetzteils/Reagenzgefäßes limitiert.

In einem Verfahrensschritt S1 wird das zu behandelnde Material in ein Reagenzgefäß mit einem darin eingesetzten Reagenzgefäß-Einsetzteil und/oder in ein mit der vorteilhaften Technologie ausgestattetes Reagenzgefäß eingefüllt. Das zu behandelnde Material kann beispielsweise eine zu untersuchende und/oder zu verarbeitende Probe sein. Es kann Biomoleküle, wie beispielsweise DNA-Stränge, RNA-Stränge, Proteine, insbesondere Antikörper und/oder Antigene umfassen. Die Ausführbarkeit des Verfahrens ist nicht auf ein bestimmtes zu behandelndes Material beschränkt.

In zumindest einem Verfahrensschritt S2 erfolgt ein Anlegen eines Unter- oder Überdrucks entsprechend einem ersten Soll-Druck, welcher auf das mindestens eine Stellelement eine erste Druckkraft größer als die darauf ausgeübte magnetische Anziehungskraft bewirkt, für ein erstes Zeitintervall.

Bevorzugter Weise weist das Verfahren auch die Verfahrensschritte S3 und S4 auf. In dem Verfahrensschritt S3 erfolgt ein Angleichen des Unter- oder Überdrucks in Richtung des Atmosphärendrucks auf einen zweiten Soll-Druck, welcher auf das mindestens eine Stellelemente eine zweite Druckkraft kleiner als die darauf ausgeübte magnetische Anziehungskraft bewirkt, für ein zweites Zeitintervall. Der Verfahrensschritt S4 beinhaltet ein Verstärken des Unter- oder Überdrucks weg von dem Atmosphärendruck auf einen dritten Soll-Druck, welcher auf das mindestens eine Stellelement eine dritte Druckkraft größer als die darauf ausgeübte magnetische Anziehungskraft bewirkt, für ein drittes Zeitintervall. Der dritte Soll-Druck kann gleich dem ersten Soll-Druck sein. Die Verfahrensschritte S3 und S4 können abwechselnd beliebig oft wiederholt werden.

## Patentansprüche

1. Reagenzgefäß-Einsetzteil mit:
einem Einsetzteilgehäuse (10), welches so ausgebildet ist, dass das Reagenzgefäß-Einsetzteil in einem Reagenzgefäß für eine Zentrifuge (70) und/oder für eine Druckvariiervorrichtung einsetzbar ist;
mindestens einem in Bezug zu dem Einsetzteilgehäuse (10) unverstellbar angeordneten Magneten (12, 12a, 12b);
mindestens einem in einem Innenvolumen (14) des Reagenzgefäß-Einsetzteils angeordneten Stelleelement (16, 16a, 16b);
einer Schneidekante (18), einer Spitze (28) und/oder einem Dorn; und
einer durchdringbaren Schicht (20), wobei das mindestens eine Stellelement (16, 16a, 16b) zumindest teilweise aus einem magnetisch-anziehbaren Material ausgebildet ist, wobei der mindestens eine Magnet (12, 12a, 12b) derart ausgebildet ist, dass eine auf das mindestens eine Stellelement (16, 16a, 16b) ausgeübte magnetische Anziehungskraft zumindest größer als eine Gewichtskraft des mindestens einen Stellelements (16, 16a, 16b) ist,
wobei das mindestens eine Stellelement (16, 16a, 16b) mittels einer bei einem Betrieb der Zentrifuge (70), in deren Rotoreinrichtung (72) das Reagenzgefäß mit dem darin eingesetzten Reagenzgefäß-Einsetzteil angeordnet ist, bewirkbaren Zentrifugalkraft größer als der magnetischen Anziehungskraft und/oder mittels einer bei einem Betrieb der Druckvariiervorrichtung, in welcher das Reagenzgefäß mit dem darin eingesetzten Reagenzgefäß-Einsetzteil angeordnet ist, bewirkbaren Druckkraft größer als der magnetischen Anziehungskraft in Bezug zu dem mindestens einen Magneten (12, 12a, 12b) verstellbar ist, **dadurch gekennzeichnet, dass** mittels des in Bezug zu dem mindestens einen Magneten (12, 12a, 12b) verstellbaren mindestens einen Stellelements (16, 16a, 16b) die Schneidekante (18), die Spitze (28) und/oder der Dorn in einen Kontakt mit der mittels der Schneidekante (18), der Spitze (28) und/oder des Dorns durchdringbaren Schicht (20) bringbar sind.

2. Reagenzgefäß-Einsetzteil nach Anspruch 1, wobei das mindestens eine Stellelement (16, 16a, 16b) aus mindestens einer Ausgangsstellung in mindestens eine Betriebsstellung in Bezug zu dem mindestens einen Magneten (12, 12a, 12b) verstellbar ist, und wobei zwischen dem mindestens einen in seiner mindestens einen Ausgangsstellung vorliegenden Stellelement (16, 16a, 16b) und einer Umgebung des in seiner mindestens einen Ausgangsstellung vorliegenden Stellelements (16, 16a, 16b) eine erste Durchströmfläche (A1) vorliegt, welche ungleich einer zweiten Durchströmfläche (A2) zwischen dem mindestens einen in seiner mindestens einen Betriebsstellung vorliegenden Stellelement (16, 16a, 16b) und einer Umgebung des in seiner mindestens einen Betriebsstellung vorliegenden Stellelements (16, 16a, 16b) ist.

3. Reagenzgefäß-Einsetzteil nach Anspruch 2, wobei das mindestens eine Stellelement (16, 16a, 16b) in seiner mindestens einen Ausgangsstellung und/oder in seiner mindestens einen Betriebsstellung einen in dem Innenvolumen (14) ausgebildeten Kanalverengungsbereich (34) flüssigkeitsdicht verschließt.

4. Reagenzgefäß-Einsetzteil nach einem der vorhergehenden Ansprüche, wobei das Reagenzgefäß-Einsetzteil mindestens einen Revolver und/oder eine Kugelschreibermechanik umfasst.

5. Reagenzgefäß-Einsetzteil nach einem der vorhergehenden Ansprüche, wobei ein zumindest aus dem mindestens einen Magneten (12, 12a, 12b) und dem mindestens einen Stellelement (16, 16a, 16b) gebildetes magnetisches System als Aufschneidemechanismus, als Durchtrennmechanismus, als Drossel, als Ventil, als Schließeinrichtung, als Klappmechanismus, als Pumpe oder als Mischeinrichtung ausgelegt ist.

6. Reagenzgefäß mit:
einer Außenwand, welche so ausgebildet ist, dass das Reagenzgefäß in einer Zentrifuge (70) und/oder in einer Druckvariiervorrichtung einsetzbar ist;
und einem Reagenzgefäß-Einsetzteil nach einem der Ansprüche 1 bis 5.

7. Verfahren zum Zentrifugieren eines Materials (76) mit den Schritten:
Einfüllen des zu zentrifugierenden Materials (76) in ein Reagenzgefäß mit einem darin eingesetzten Reagenzgefäß-Einsetzteil nach einem der Ansprüche 1 bis 5 und/oder in ein Reagenzgefäß nach Anspruch 6; und Zumindest Betreiben einer Zentrifuge (70) mit einer aktuellen Drehgeschwindigkeit entsprechend einer ersten Soll-Drehgeschwindigkeit,
welche auf das mindestens eine Stellelement (16, 16a, 16b) eine erste Zentrifugalkraft größer als die darauf ausgeübte magnetische Anziehungskraft bewirkt, für ein erstes Zeitintervall.

8. Verfahren nach Anspruch 7, mit den zusätzlichen Schritten:
Zumindest einmaliges zwischenzeitliches Reduzieren der aktuellen Drehgeschwindigkeit auf eine zweite Soll-Drehgeschwindigkeit, welche auf das mindestens eine Stellelemente (16, 16a, 16b) eine zweite Zentrifugalkraft kleiner als die darauf ausgeübte magnetische Anziehungskraft bewirkt, für ein zweites Zeitintervall und Erhöhen der aktuellen Drehgeschwindigkeit auf eine dritte Soll-Drehgeschwindigkeit,
welche auf das mindestens eine Stellelement (16, 16a, 16b) eine dritte Zentrifugalkraft größer als die darauf ausgeübte magnetische Anziehungskraft bewirkt, für ein drittes Zeitintervall.

9. Verfahren zum Druckbehandeln eines Materials mit den Schritten:
Einfüllen des zu behandelnden Materials in ein Reagenzgefäß mit einem darin eingesetzten Reagenzgefäß-Einsetzteil nach einem der Ansprüche 1 bis 5 und/oder in ein Reagenzgefäß nach Anspruch 6; und
Zumindest einmaliges Anlegen eines Unter- oder Überdrucks entsprechend einem ersten Soll-Druck, welcher auf das mindestens eine Stellelement (16, 16a, 16b) eine erste Druckkraft größer als die darauf ausgeübte magnetische Anziehungskraft bewirkt, für ein erstes Zeitintervall (S2).

10. Verfahren nach Anspruch 9, mit den zusätzlichen Schritten:
Zumindest einmaliges Angleichen des Unter- oder Überdrucks in Richtung des Atmosphärendrucks auf einen zweiten Soll-Druck, welcher auf das mindestens eine Stellelemente (16, 16a, 16b) eine zweite Druckkraft kleiner als die darauf ausgeübte magnetische Anziehungskraft bewirkt, für ein zweites Zeitintervall (S3) und Verstärken des Unter- oder Überdrucks weg von dem Atmosphärendruck auf einen dritten Soll-Druck, welcher auf das mindestens eine Stellelement (16, 16a, 16b) eine dritte Druckkraft größer als die darauf ausgeübte magnetische Anziehungskraft bewirkt, für ein drittes Zeitintervall (S4).

## Claims

1. Reagent vessel insert with:
an insert housing (10), which is formed such that the reagent vessel insert can be inserted in a reagent vessel for a centrifuge (70) and/or for a pressure varying device;
at least one magnet (12, 12a, 12b), which is arranged non-adjustably with respect to the insert housing (10);
at least one adjusting element (16, 16a, 16b), which is arranged in an interior volume (14) of the reagent vessel insert;
a cutting edge (18), a point (28) and/or a spike; and a layer (20) that can be penetrated, the at least one adjusting element (16, 16a, 16b) being at least partially formed from a magnetically attractable material, the at least one magnet (12, 12a, 12b) being formed in such a way that a magnetic force of attraction exerted on the at least one adjusting element (16, 16a, 16b) is at least greater than a force of the weight of the at least one adjusting element (16, 16a, 16b),
the at least one adjusting element (16, 16a, 16b) being adjustable with respect to the at least one magnet (12, 12a, 12b) by means of a centrifugal force that can be brought about when operating the centrifuge (70) in the rotor device (72) of which the reagent vessel with the reagent vessel insert inserted therein is arranged and is greater than the magnetic force of attraction and/or by means of a compressive force that can be brought about when operating the pressure varying device in which the reagent vessel with the reagent vessel insert inserted therein is arranged and is greater than the magnetic force of attraction, **characterized in that** it is possible by means of the at least one adjusting element (16, 16a, 16b) that is adjustable with respect to the at least one magnet (12, 12a, 12b) for the cutting edge (18), the point (28) and/or the spike to be brought into contact with the layer (20) that can be penetrated by means of the cutting edge (18), the point (28) and/or the spike.

2. Reagent vessel insert according to Claim 1, it being possible for the at least one adjusting element (16, 16a, 16b) to be adjustable with respect to the at least one magnet (12, 12a, 12b) from at least one starting position into at least one operating position, and there being between the at least one adjusting element (16, 16a, 16b) in its at least one starting position and a surrounding of the adjusting element (16, 16a, 16b) in its at least one starting position a first through-flow area (A1) that is unequal to a second through-flow area (A2) between the at least one adjusting element (16, 16a, 16b) in its at least one operating position and a surrounding of the adjusting element (16, 16a, 16b) in its at least one operating position.

3. Reagent vessel insert according to Claim 2, the at least one adjusting element (16, 16a, 16b) in its at least one starting position and/or in its at least one operating position closing with a liquidtight seal a channel-restricting region (34) that is formed in the interior volume (14).

4. Reagent vessel insert according to one of the preceding claims, the reagent vessel insert comprising at least one turret and/or a ballpoint pen mechanism.

5. Reagent vessel insert according to one of the preceding claims, the at least one magnetic system formed by the at least one magnet (12, 12a, 12b) and the at least one adjusting element (16, 16a, 16b) being designed as a cutting-open mechanism, a severing mechanism, a throttle, a valve, a closing device, a flap mechanism, a pump or a mixing device.

6. Reagent vessel with:
an outer wall, which is formed such that the reagent vessel can be used in a centrifuge (70) and/or a pressure varying device;
and a reagent vessel insert according to one of Claims 1 to 5.

7. Method for the centrifuging of a material (76) with the steps of:
introducing the material (76) to be centrifuged into a reagent vessel with a reagent vessel insert inserted therein according to one of Claims 1 to 5 and/or into a reagent vessel according to Claim 6; and
at least operating a centrifuge (70) for a first time interval at a current rotating speed corresponding to a first setpoint rotating speed, which brings about on the at least one adjusting element (16, 16a, 16b) a first centrifugal force, which is greater than the magnetic force of attraction exerted on it.

8. Method according to Claim 7, with the additional steps of:
for a second time interval making at least a one-off interim reduction in the current rotating speed to a second setpoint rotating speed, which brings about on the at least one adjusting element (16, 16a, 16b) a second centrifugal force, which is less than the magnetic force of attraction exerted on it, and for a third time interval making an increase in the current rotating speed to a third setpoint rotating speed, which brings about on the at least one adjusting element (16, 16a, 16b) a third centrifugal force, which is greater than the magnetic force of attraction exerted on it.

9. Method for the pressure treatment of a material with the steps of:
introducing the material to be treated into a reagent vessel with a reagent vessel insert inserted therein according to one of Claims 1 to 5 and/or into a reagent vessel according to Claim 6; and
applying a negative or positive pressure at least as a one-off measure for a first time interval corresponding to a first setpoint pressure, which brings about on the at least one adjusting element (16, 16a, 16b) a first compressive force, which is greater than the magnetic force of attraction exerted on it (S2).

10. Method according to Claim 9, with the additional steps of:
equalizing the negative or positive pressure at least as a one-off measure for a second time interval in the direction of atmospheric pressure to a second setpoint pressure, which brings about on the at least one adjusting element (16, 16a, 16b) a second compressive force, which is less than the magnetic force of attraction exerted on it (S3) and intensifying the negative or positive pressure for a third time interval away from atmospheric pressure to a third setpoint pressure, which brings about on the at least one adjusting element (16, 16a, 16b) a third compressive force, which is greater than the magnetic force of attraction exerted on it (S4).

## Revendications

1. Pièce d'insertion de flacon de réactif, avec:
un boîtier de pièce d'insertion (10), qui est configuré de telle manière que la pièce d'insertion de flacon de réactif puisse être insérée dans un flacon de réactif pour une centrifugeuse (70) et/ou pour un dispositif de variation de pression;
au moins un aimant (12, 12a, 12b) disposé de façon inamovible par rapport au boîtier de pièce d'insertion (10);
au moins un élément de réglage (16, 16a, 16b) disposé dans un volume intérieur (14) de la pièce d'insertion de flacon de réactif;
une arête de coupe (18), une pointe (28) et/ou une aiguille; et
une couche pouvant être perforée (20), dans laquelle ledit au moins un élément de réglage (16, 16a, 16b) est formé au moins partiellement en un matériau pouvant être attiré magnétiquement, dans laquelle ledit au moins un aimant (12, 12a, 12b) est configuré de telle manière qu'une force d'attraction magnétique exercée sur ledit au moins un élément de réglage (16, 16a, 16b) soit au moins plus élevée qu'une force pondérale dudit au moins un élément de réglage (16, 16a, 16b), dans laquelle ledit au moins un élément de réglage (16, 16a, 16b) peut être déplacé par rapport audit au moins un aimant (12, 12a, 12b) au moyen d'une force centrifuge, plus élevée que la force d'attraction magnétique, pouvant être produite lors d'un fonctionnement de la centrifugeuse (70), dans le dispositif de rotor (72) de laquelle le flacon de réactif avec la pièce d'insertion de flacon de réactif insérée est disposé, et/ou au moyen d'une force de pression, plus élevée que la force d'attraction magnétique, pouvant être produite pendant un fonctionnement du dispositif de variation de pression, dans lequel le flacon de réactif avec la pièce d'insertion de flacon de réactif insérée est disposé, **caractérisé en ce qu'**au moyen dudit au moins un élément de réglage (16, 16a, 16b) déplaçable par rapport audit au moins un aimant (12, 12a, 12b), l'arête de coupe (18), la pointe (28) et/ou l'aiguille peut être amenée en contact avec la couche (20) pouvant être perforée au moyen de l'arête de coupe (18), de la pointe (28) et/ou de l'aiguille.

2. Pièce d'insertion de flacon de réactif selon la revendication 1, dans laquelle ledit au moins un élément de réglage (16, 16a, 16b) est déplaçable par rapport audit au moins un aimant (12, 12a, 12b) d'au moins une position initiale à au moins une position de fonctionnement, et dans laquelle il se trouve entre ledit au moins un élément de réglage (16, 16a, 16b) se trouvant dans sa dite au moins une position initiale et un environnement dudit élément de réglage (16, 16a, 16b) se trouvant dans sa dite au moins une position initiale une face de passage (A1), qui n'est pas égale à une deuxième face de passage (A2) entre ledit au moins un élément de réglage (16, 16a, 16b) se trouvant dans sa dite au moins une position de fonctionnement et un environnement de l'élément de réglage (16, 16a, 16b) se trouvant dans sa dite au moins une position de fonctionnement.

3. Pièce d'insertion de flacon de réactif selon la revendication 2, dans laquelle ledit au moins un élément de réglage (16, 16a, 16b) dans sa dite au moins une position initiale et/ou dans sa dite au moins une position de fonctionnement ferme de façon étanche au fluide une région d'étranglement de canal (34) formée dans le volume intérieur (14).

4. Pièce d'insertion de flacon de réactif selon l'une quelconque des revendications précédentes, dans laquelle la pièce d'insertion de flacon de réactif comprend au moins une tourelle et/ou un mécanisme de stylo à bille.

5. Pièce d'insertion de flacon de réactif selon l'une quelconque des revendications précédentes, dans laquelle un système magnétique composé au moins dudit au moins un aimant (12, 12a, 12b) et dudit au moins un élément de réglage (16, 16a, 16b) est conçu comme un mécanisme d'incision, comme un mécanisme de coupe, comme un élément d'étranglement, comme une soupape, comme un dispositif de fermeture, comme un mécanisme de rabattement, comme une pompe ou comme un dispositif de mélange.

6. Flacon de réactif avec:
une paroi extérieure, qui est configurée de telle manière que le flacon de réactif puisse être inséré dans une centrifugeuse (70) et/ou dans un dispositif de variation de pression, et avec une pièce d'insertion de flacon de réactif selon l'une quelconque des revendications 1 à 5.

7. Procédé pour centrifuger un matériau (76), comprenant les étapes suivantes:
charger le matériau à centrifuger (76) dans un flacon de réactif avec une pièce d'insertion de flacon de réactif selon l'une quelconque des revendications 1 à 5 insérée dans celui-ci et/ou un flacon de réactif selon la revendication 6; et
au moins faire fonctionner une centrifugeuse (70) avec une vitesse de rotation actuelle correspondant à une première vitesse de rotation de consigne, qui applique audit au moins un élément de réglage (16, 16a, 16b) un première force centrifuge plus élevée que la force d'attraction magnétique exercée sur celui-ci, pendant un premier intervalle de temps.

8. Procédé selon la revendication 7, comprenant les étapes supplémentaires suivantes:
réduire temporairement au moins une fois la vitesse de rotation actuelle à une deuxième vitesse de rotation de consigne, qui applique audit au moins un élément de réglage (16, 16a, 16b) une deuxième force centrifuge moins élevée que la force d'attraction magnétique exercée sur celui-ci, pendant un deuxième intervalle de temps, et augmenter la vitesse de rotation actuelle à une troisième vitesse de rotation de consigne, qui applique audit au moins un élément de réglage (16, 16a, 16b) une troisième force centrifuge plus élevée que la force d'attraction magnétique exercée sur celui-ci, pendant un troisième intervalle de temps.

9. Procédé pour le traitement sous pression d'un matériau comprenant les étapes suivantes:
charger le matériau à traiter dans un flacon de réactif avec une pièce d'insertion de flacon de réactif selon l'une quelconque des revendications 1 à 5 insérée dans celui-ci et/ou dans un flacon de réactif selon la revendication 6; et
appliquer au moins une fois une dépression ou une surpression correspondant à une première pression de consigne, qui applique audit au moins un élément de réglage (16, 16a, 16b) une première force de pression plus élevée que la force d'attraction magnétique exercée sur celui-ci, pendant un premier intervalle de temps (S2).

10. Procédé selon la revendication 9, comprenant les étapes supplémentaires suivantes:
égaler au moins une fois la dépression ou la surpression en se rapprochant de la pression atmosphérique à une deuxième pression de consigne, qui applique audit au moins un élément de réglage (16, 16a, 16b) une deuxième force de pression moins élevée que la force d'attraction magnétique exercée sur celui-ci, pendant un deuxième intervalle de temps (S3) et accroître la dépression ou la surpression en s'écartant de la pression atmosphérique à une troisième pression de consigne, qui applique audit au moins un élément de réglage (16, 16a, 16b) une troisième force de pression, qui est plus élevée que la force d'attraction magnétique exercée sur celui-ci, pendant un troisième intervalle de temps (S4).
